# EUROPEAN PATENT APPLICATION

(11) **EP 3 585 002 A1**
(43) Date of publication of application: **25.12.2019**
(21) Application number: 18754013.3
(22) Date of filing: 05.02.2018
(51) Int. Cl.: H04L 12/28, H04L 12/46, H04L 12/66

(54) **ON-VEHICLE GATEWAY DEVICE AND COMMUNICATION CUTTING-OFF METHOD**

(30) Priority: 16.02.2017 JP 2017026734
(71) Applicant: Clarion Co., Ltd., Saitama-shi, Saitama 330-0081 (JP)
(72) Inventor: KAWAUCHI, Takashi, Tokyo 100-8280 (JP); NAGAI, Yasushi, Saitama-shi Saitama 330-0081 (JP)
(74) Representative: MERH-IP Matias Erny Reichl Hoffmann Patentanwälte PartG mbB
(86) International application number: PCT/JP2018/003860
(87) International publication number: WO 2018/150930

(57) **Abstract**

An in-vehicle gateway device connected to a plurality of networks, each connected with a plurality devices mounted on a vehicle, the in-vehicle gateway device including: an incident detection processor which detects an incident occurring in any one of the plurality of networks; and a communication controller which determines, in a case where the incident is detected, a restriction target network from among the plurality of networks on the basis of a place where the incident has occurred and a control state of the vehicle and restricts communication in the restriction target network.

## Description

### Technical Field

The present invention relates to an in-vehicle gateway device and a communication restriction method using the device.

### Background Art

In recent years, technology has started to spread which implements safety driving assist and automatic driving of vehicles by acquiring various types of information in a vehicle through communication between an electronic control unit (ECU) mounted on the vehicle and an external information communication device and using the acquired information. In such technology, there is an increasing risk that vehicles will be targeted by cyber-attacks since ECUs are more constantly connected to external information communication devices and general-purpose devices and general-purpose programs are more in used in information communication devices. Cyber-attacks can cause automobiles to experience incidents such as disabling service, malicious code rewriting, unauthorized access, and improper use. Therefore, automobile manufacturers need to be prepared for cyber-attacks by monitoring the occurrence of cyber-attacks or incidents to or on networks in automobiles and restricting unauthorized communication.

For restriction of such unauthorized communication, for example, a technique described in PTL 1 is known. In the technique of PTL 1, a security check program determines which networks are authorized to communicate with each other in inter-network communication among a plurality of networks, collects denied access between each pair of networks, and generate a set of rules for restriction of communication. Then, unauthorized communication is rejected by automatically applying the generated set of rules to a gateway device for the networks.

### Citation List

### Patent Literature

PTL 1: Japanese Patent No. 4493654

### Summary of Invention

### Technical Problem

However, applying the technology described in PTL 1 to networks in a vehicle that performs safety driving assist or automatic driving may result in restriction of all communication on the networks including normal communication during the vehicle control. As a result, the vehicle control may be adversely affected, which may cause an unexpected accident or the like.

### Solution to Problem

An in-vehicle gateway device according to a first aspect of the present invention is connected to a plurality of networks, each connected with a plurality devices mounted on a vehicle, the in-vehicle gateway device including: an incident detection processor which detects an incident occurring in any one of the plurality of networks; and a communication controller which determines, in a case where the incident is detected, a restriction target network from among the plurality of networks on the basis of a place where the incident has occurred and a control state of the vehicle and restricts communication in the restriction target network.

A communication restriction method according to a second aspect of the present invention is a communication restriction method in a plurality of networks, each connected with a plurality devices mounted on a vehicle, the plurality of networks each connected to an in-vehicle gateway device, the communication restriction method including: detecting, by the in-vehicle gateway device, an incident occurring in any one of the plurality of networks; and determining, by the in-vehicle gateway device, a restriction target network from among the plurality of networks on the basis of a place where the incident has occurred and a control state of the vehicle and restricting communication in the restriction target network in a case where the incident is detected.

### Advantageous Effects of Invention

According to the present invention, unauthorized communication can be restricted without adversely affecting vehicle control.

### Brief Description of Drawings

[FIG. 1] FIG. 1 is a configuration diagram of a vehicle information network system according to an embodiment of the present invention.
[FIG. 2] FIG. 2 is a block diagram illustrating an exemplary hardware configuration of a vehicle and an in-vehicle gateway device.
[FIG. 3] FIG. 3 is a block diagram illustrating an exemplary hardware configuration of a roadside device and a center server.
[FIG. 4] FIG. 4 is a block diagram illustrating an exemplary functional configuration of the in-vehicle gateway device.
[FIG. 5] FIG. 5 is a block diagram illustrating an exemplary functional configuration of the center server.
[FIG. 6] FIG. 6 is an explanatory table illustrating an exemplary configuration of a security policy.
[FIG. 7] FIG. 7 is an explanatory table illustrating an exemplary configuration of incident determination information.
[FIG. 8] FIG. 8 is an explanatory table illustrating an exemplary configuration of a vehicle ECU information packet.
[FIG. 9] FIG. 9 is a flowchart of communication control processing executed by the in-vehicle gateway device.
[FIG. 10] FIG. 10 is a flowchart of recovery processing executed by the in-vehicle gateway device.
[FIG. 11] FIG. 11 is a sequence chart of the vehicle information network system.

### Description of Embodiments

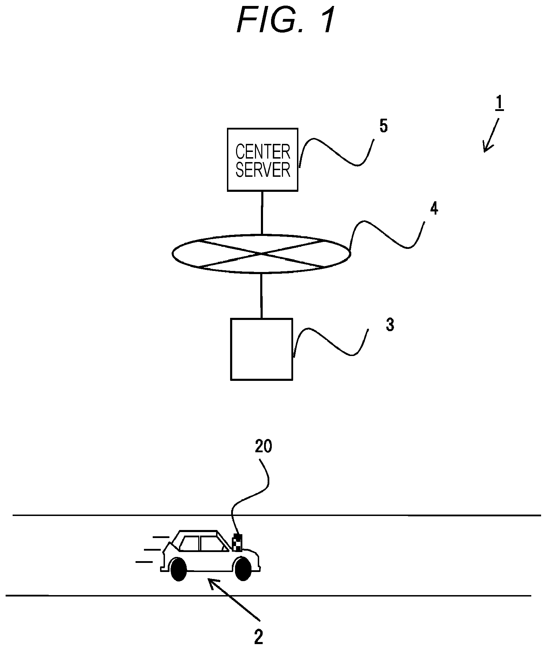

Hereinafter, embodiments of the present invention will be described with reference to FIGS. 1 to 10. FIG. 1 is a configuration diagram of a vehicle information network system according to an embodiment of the present invention. A vehicle information network system 1 illustrated in FIG. 1 includes a vehicle 2, a roadside device 3, a network 4, and a center server 5.

The vehicle 2 is mounted with an in-vehicle gateway device 20. The roadside device 3 is installed fixedly at a predetermined point on a side of a road on which the vehicle 2 drives. The roadside device 3 and the center server 5 are mutually connected via the network 4. The center server 5 performs data communication with the in-vehicle gateway device 20 via the network 4 and the roadside device 3.

Note that the vehicle information network system 1 may include a plurality of vehicles 2 each mounted with an in-vehicle gateway device 20. Moreover, a plurality of roadside devices 3 may be installed at different points. In the following description, the operation of the in-vehicle gateway device 20 mounted on the single vehicle 2 will be mainly described.

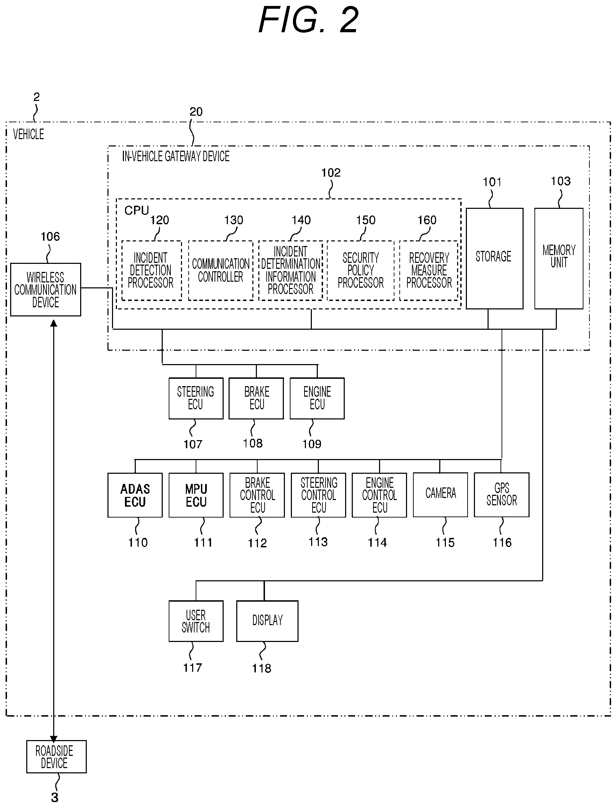

FIG. 2 is a block diagram illustrating an exemplary hardware configuration of the vehicle 2 and the in-vehicle gateway device 20. The vehicle 2 includes the in-vehicle gateway device 20 and a wireless communication device 106, a steering ECU 107, a brake ECU 108, an engine ECU 109, an ADAS ECU 110, an MPU ECU 111, a brake control ECU 112, a steering control ECU 113, an engine control ECU 114, a camera 115, a GPS sensor 116, a user switch 117, and a display 118 each connected to the in-vehicle gateway device 20.

The steering ECU 107, the brake ECU 108, and the engine ECU 109 are devices for performing driving control of the vehicle 2, and are connected to each other to form a network. This network will be hereinafter referred to as "control system network domain." The ADAS ECU 110, the MPU ECU 111, the brake control ECU 112, the steering control ECU 113, the engine control ECU 114, the camera 115, and the GPS sensor 116 are devices for performing driving assist or automatic driving of the vehicle 2, and are connected to each other to form a network. This network will be hereinafter referred to as "driving assist system network domain." The user switch 117 and the display 118 are devices for providing a user interface for a passenger of the vehicle 2 and are mutually connected to form a network. This network will be hereinafter referred to as "information system network domain." That is, the in-vehicle gateway device 20 is connected to the control system network domain, the driving assist system network domain, and the information system network domain, and performs data communication with devices in these networks.

In each of the above networks, devices in the same network can directly perform data communication without passing through the in-vehicle gateway device 20. For example in the control system network domain, communication for driving control of the vehicle 2 is performed. In the driving assist system network domain, communication for driving assist or automatic driving of the vehicle 2 is performed. In the information system network domain, communication for the user interface to a passenger of the vehicle 2 is performed. Meanwhile, data communication between devices belonging to different networks is performed via the in-vehicle gateway device 20.

The wireless communication device 106 is connected to the in-vehicle gateway device 20 and performs wireless communication with the roadside device 3. The in-vehicle gateway device 20 performs data communication with the roadside device 3 by wireless communication via the wireless communication device 106.

The steering ECU 107 is a device that controls the steering mechanism of the vehicle 2 to control the driving direction in accordance with steering operation by a passenger of the vehicle 2 or a steering control instruction transmitted from the steering control ECU 113. The brake ECU 108 is a device that controls the brake of the vehicle 2 to control deceleration in accordance with brake operation by the passenger of the vehicle 2 or a brake control instruction transmitted from the brake control ECU 112. The engine ECU 109 is a device that controls the engine of the vehicle 2 to control the speed in accordance with the driving state of the vehicle 2 or an engine control instruction transmitted from the engine control ECU 114. These devices perform driving control of the vehicle 2.

The ADAS ECU 110 is a device that determines acceleration, deceleration, stop, or the like of the vehicle 2 from information inside and outside of the vehicle 2 and implements automatic driving or driving assist service of the vehicle 2 using the determination result. The ADAS ECU 110 determines the behavior of the vehicle 2 with reference to an external image acquired from the camera 115, the position of the vehicle 2 acquired from the GPS sensor 116, surrounding map information of the vehicle 2 held by the MPU ECU 111, and the like. Then, the ADAS ECU 110 instructs the brake control ECU 112, the steering control ECU 113, and the engine control ECU 114 to each output a control instruction corresponding to the determined behavior of the vehicle 2. The MPU ECU 111 is a device that holds map information such as a road shape around the vehicle 2. The brake control ECU 112 is a device that transmits a brake control instruction including a brake strength to the brake ECU 108 in accordance with an instruction by the ADAS ECU 110. The steering control ECU 113 is a device that transmits a steering control instruction including an operation angle of the steering to the steering ECU 107 in accordance with an instruction by the ADAS ECU 110. The engine control ECU 114 is a device that transmits an engine control instruction including the number of revolutions of the engine to the engine ECU 109 in accordance with an instruction by the ADAS ECU 110. The camera 115 is a device that outputs an image of the surroundings of the vehicle 2 to the ADAS ECU 110. The GPS sensor 116 is a positioning device that receives signals from satellites to perform positioning of the vehicle 2. These devices perform driving assist or automatic driving of the vehicle 2.

The user switch 117 is a device for detecting predetermined input operation by a passenger of the vehicle 2. A user as the passenger of the vehicle 2 uses the user switch 117 for example for switching the automatic driving or the driving assist function of the vehicle 2 from active to inactive or from active to inactive. The display 118 is, for example, a liquid crystal monitor and displays various types of information to a passenger. For example when automatic driving or driving assist is being performed in the vehicle 2, displaying on the display 118 that these functions are active allows the passenger to grasp the state of the vehicle 2. These devices provide a user interface for a passenger of the vehicle 2.

The in-vehicle gateway device 20 includes a storage 101, a CPU 102, and a memory unit 103. The storage 101 is an auxiliary storage such as an HDD or a flash memory. The CPU 102 controls the in-vehicle gateway device 20 by reading and executing a predetermined control program stored, for example, in the storage 101.

The memory unit 103 is the main storage used by the CPU 102 for executing a control program.

The CPU 102 includes an incident detection processor 120, a communication controller 130, an incident determination information processor 140, a security policy processor 150, and a recovery measure processor 160 in terms of functions. That is, the incident detection processor 120, the communication controller 130, the incident determination information processor 140, the security policy processor 150, and the recovery measure processor 160 are implemented by means of software by a control program executed by the CPU 102. The incident detection processor 120, the communication controller 130, the incident determination information processor 140, the security policy processor 150, and the recovery measure processor 160 will be described in detail later. An incident is an event that occurs in network security such as disabling service, malicious code rewriting, unauthorized access, and improper use due to a cyber-attack or the like.

Note that each of the incident detection processor 120, the communication controller 130, the incident determination information processor 140, the security policy processor 150, and the recovery measure processor 160 may be implemented, for example, by an electronic circuit such as an FPGA that can implement a function equivalent to that of the CPU 102.

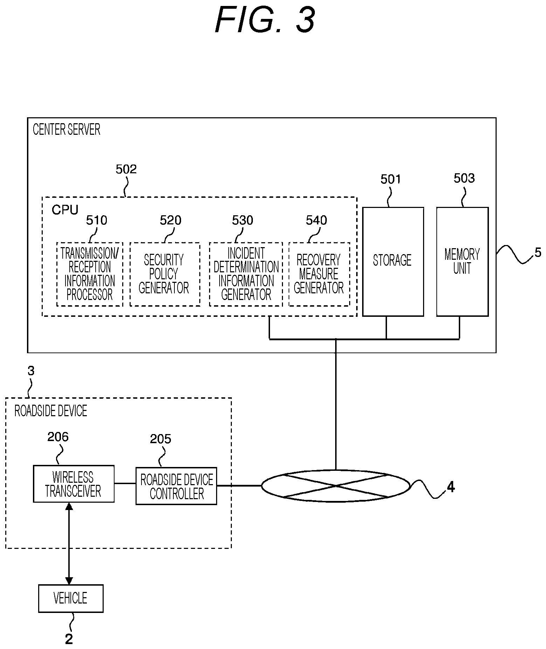

FIG. 3 is a block diagram illustrating an exemplary hardware configuration of the roadside device 3 and the center server 5. The roadside device 3 includes a roadside device controller 205 and a wireless transceiver 206.

The wireless transceiver 206 performs data communication with the in-vehicle gateway device 20 mounted on the vehicle 2 by transmitting and receiving wireless signals. The roadside device controller 205 controls the roadside device 3. The roadside device controller 205 is connected to the network 4. The roadside device controller 205 performs data communication with the center server 5 via the network 4. The roadside device controller 205 controls the wireless transceiver 206 to transmit information transmitted from the center server 5 to the vehicle 2 and transmits information received from the vehicle 2 to the center server 5.

The center server 5 includes a storage 501, a CPU 502, and a memory unit 503. The storage 501 is an auxiliary storage such as an HDD or a flash memory. The CPU 502 processes information to transmit to/receive from the roadside device 3 by reading and executing a predetermined control program stored, for example, in the storage 501. The memory unit 503 is the main storage used by the CPU 502 for executing a control program.

The CPU 502 includes a transmission/reception information processor 510, a security policy generator 520, an incident determination information generator 530, and a recovery measure generator 540 in terms of functions. That is, the transmission/reception information processor 510, the security policy generator 520, the incident determination information generator 530, and the recovery measure generator 540 are implemented by means of software by a control program executed by the CPU 502. The transmission/reception information processor 510, the security policy generator 520, the incident determination information generator 530, and the recovery measure generator 540 will be described in detail later.

Next, functional configurations of the in-vehicle gateway device 20 and the center server 5 will be described.

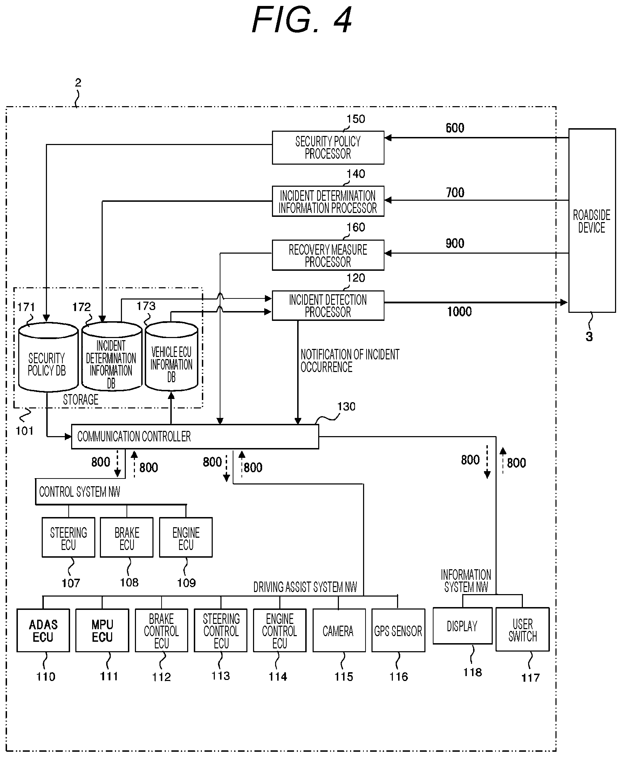

FIG. 4 is a block diagram illustrating an exemplary functional configuration of the in-vehicle gateway device 20. The storage 101 includes a security policy DB 171, an incident determination information DB 172, and a vehicle ECU information DB 173.

The security policy processor 150 communicates with the roadside device 3 using the wireless communication device 106 of FIG. 2 and receives a security policy 600, which will be described later, from the center server 5 via the roadside device 3. The received security policy 600 is stored in the security policy DB 171.

The incident determination information processor 140 communicates with the roadside device 3 using the wireless communication device 106, and receives incident determination information 700, which will be described later, from the center server 5 via the roadside device 3. The received incident determination information 700 is stored in the incident determination information DB 172.

The recovery measure processor 160 communicates with the roadside device 3 using the wireless communication device 106, and receives a recovery measure 900 from the center server 5 via the roadside device 3. The received recovery measure 900 is output to the communication controller 130. The recovery measure 900 is information transmitted from the center server 5 to restore the device in which the security incident has occurred in the case where a security incident has occurred when there has been a cyber-attack to any of the devices in the control system network domain, the driving assist system network domain, or the information system network domain described above. The recovery measure 900 includes, for example, a downdate instruction and a setting file of software operating on the device.

The incident detection processor 120 detects the incident, when an incident occurs, on the basis of the incident determination information 700 stored in the incident determination information DB 172 and vehicle ECU information stored in the vehicle ECU information DB 173. In the case where the occurrence of the incident is detected, the incident detection processor 120 communicates with the roadside device 3 using the wireless communication device 106 and transmits incident information 1000 related to the detected incident to the center server 5 via the roadside device 3. The incident information 1000 includes the location where the incident has been detected, a software version of the device from which the information has been transmitted when the incident has been detected, the cause of the incident, and the date and time of detection of the incident. The incident detection processor 120 also outputs a notification of incident occurrence indicating the place of occurrence to the communication controller 130 in the case where the occurrence of the incident is detected.

The communication controller 130 relays communication among the networks connected to the in-vehicle gateway device 20. For example, a brake control instruction transmitted from the brake control ECU 112 in the driving assist system network domain to the brake ECU 108 in the control system network domain is transferred between these networks. Communication is performed by a vehicle ECU information packet 800 described later between devices in the same network or between devices in different networks. When receiving a vehicle ECU information packet 800 transmitted and received between devices, the communication controller 130 adds information included in the packet to the vehicle ECU information DB 173 as vehicle ECU information. That is, the vehicle ECU information DB 173 stores information included in vehicle ECU information packets 800 in chronological order as the vehicle ECU information.

When receiving the recovery measure 900 from the recovery measure processor 160, the communication controller 130 transmits the received recovery measure 900 to the destination device. In addition, when receiving the notification of incident occurrence from the incident detection processor 120, the communication controller 130 determines which network to restrict communication from (hereinafter referred to as restriction target network) on the basis of the security policy 600 stored in the security policy DB 171 and restricts communication among devices in the restriction target network.

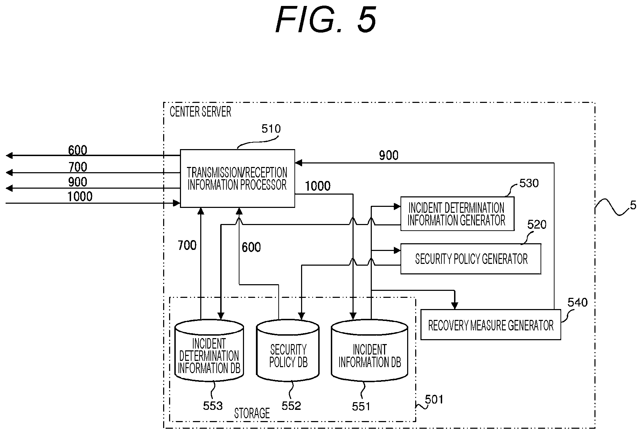

FIG. 5 is a block diagram illustrating an exemplary functional configuration of the center server 5. The storage 501 includes an incident information DB 551, a security policy DB 552, and an incident determination information DB 553.

The transmission/reception information processor 510 transmits and receives information to and from the roadside device 3. For example, the transmission/reception information processor 510 receives the incident information 1000 transmitted from the vehicle 2 via the roadside device 3. The transmission/reception information processor 510 stores the incident information 1000 received from the vehicle 2 in the incident information DB 551.

The security policy generator 520 generates a security policy 600 corresponding to the vehicle 2 on the basis of the incident information 1000 stored in the incident information DB 551. The security policy 600 generated by the security policy generator 1600 is stored in the security policy DB 552. The transmission/reception information processor 510 retrieves the security policy 600 corresponding to the vehicle 2 from the security policy DB 552 and periodically transmits the security policy 600 to the vehicle 2 via the roadside device 3.

The incident determination information generator 530 generates incident determination information 700 corresponding to the vehicle 2 on the basis of the incident information 1000 stored in the incident information DB 551. The incident determination information 700 generated by the incident determination information generator 530 is stored in the incident determination information DB 553. The transmission/reception information processor 510 retrieves the incident determination information 700 corresponding to the vehicle 2 from the incident determination information DB 553 and periodically transmits the incident determination information 700 to the vehicle 2 via the roadside device 3.

The recovery measure generator 540 generates a recovery measure 900 corresponding to the incident occurred in the vehicle 2 on the basis of the incident information 1000 stored in the incident information DB 551. The transmission/reception information processor 510 transmits the recovery measure 900 generated by the recovery measure generator 540 to the vehicle 2 via the roadside device 3.

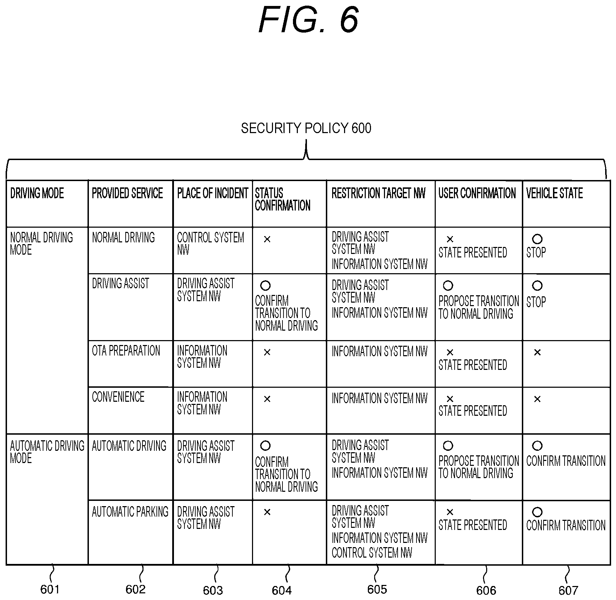

FIG. 6 is an explanatory table illustrating an exemplary configuration of a security policy 600. The security policy 600 includes information of a driving mode 601, provided service 602, a place of incident 603, status confirmation 604, a restriction target NW 605, user confirmation 606, and a vehicle state 607.

The driving mode 601 is information indicating a driving mode set in the vehicle 2. For example when a passenger drives the vehicle 2, the passenger sets the driving mode of the vehicle 2 to a "normal driving mode." Alternatively, when the passenger causes the vehicle 2 to perform automatic driving without driving the vehicle 2, the passenger sets the driving mode of the vehicle 2 to an "automatic driving mode." The driving mode 601 stores information indicating these driving modes that can be set in the vehicle 2.

The provided service 602 is information indicating service provided to a passenger in the vehicle 2. A passenger of the vehicle 2 can select service provided by the vehicle 2 in each driving mode. For example in the case where the driving mode is the "normal driving mode," the passenger can select from provided service such as "normal driving" without driving assist or "driving assist" for performing driving assist by the ADAS ECU 110. In the case where the driving mode is the "automatic driving mode," the passenger can select from provided service such as "automatic driving" for causing the vehicle 2 to automatically drives on a road and "automatic parking" for causing the vehicle 2 to be automatically parked in a parking lot. It is also possible to provide services such as "OTA preparation" for preparing for a software update of devices mounted on the vehicle 2 and "convenience" for providing various types of information to a passenger. The provided service 602 stores information indicating these services that can be provided in the vehicle 2.

The place of incident 603 is information indicating the place where the incident has occurred in the vehicle 2. The place of incident 603 stores, as information indicating the place where the incident has occurred, information indicating one of the networks in the vehicle 2, that is, one of the control system network domain, the driving assist system network domain, and the information system network domain for each control state of the vehicle 2 indicated by a combination of the driving mode 601 and the provided service 602.

The status confirmation 604 is information indicating whether the status confirmation of the vehicle 2 is necessary before the communication controller 130 restricts communication in the restriction target network when an incident is detected. The status confirmation 604 stores, for each place of incident 603, information indicating whether the status of the vehicle 2 has been confirmed and, in the case where the status confirmation is necessary, information indicating the contents.

The communication restriction target NW 605 is information indicating a network which the communication controller 130 restricts communication from when an incident is detected. The restriction target NW 605 stores, as information indicating a restriction target network for each place of incident 603, information indicating one of the control system network domain, the driving assist system network domain, and the information system network domain.

The user confirmation 606 is information indicating whether confirmation by a passenger of the vehicle 2 is necessary before the communication controller 130 restricts communication in the restriction target network when an incident is detected. The user confirmation 606 stores, for each place of incident 603, information indicating whether a passenger has confirmed and in the case where confirmation by the passenger is necessary, information indicating the contents to be presented for confirmation by the passenger.

The vehicle state 607 is information indicating whether it is necessary that the vehicle 2 be in a predetermined vehicle state when the communication controller 130 restricts communication in the restriction target network when an incident is detected. The vehicle state 607 includes, for each place of incident 603, information indicating whether a vehicle state as a condition for the start of restriction is satisfied and in the case where the condition for the start of restriction is satisfied, information indicating a vehicle state corresponding to the condition for the start of restriction.

When receiving the notification of incident occurrence, the communication controller 130 identifies one of the networks in the vehicle 2 as the place of incident on the basis of the information included in the notification of incident occurrence. Furthermore, as the current control state of the vehicle 2, a driving mode and provided service currently set in the vehicle 2 are specified. Then, a security policy 600 as illustrated in FIG. 6 is read out from the security policy DB 171, and the control state of the vehicle 2 and the area corresponding to the place of incident are specified in the security policy 600 on the basis of information of the driving mode 601, the provided service 602, and the place of incident 603. After specifying an area in the security policy 600 in this manner, the communication controller 130 determines which network is the restriction target network on the basis of information of the restriction target NW 605 for the area and restricts the communication targeted to the restriction target network. In addition, before restriction of communication in the restriction target network, information is presented to a passenger or the vehicle state is confirmed as needed on the basis of information of the status confirmation 604, the user confirmation 606, and the vehicle state 607 in the corresponding row.

Note that the target of restriction of communication may be set for each device but for each network, like the restriction target NW 605, in the security policy 600. One approach in this case is that, for example, the communication controller 130 distributes a blacklist indicating a CAN ID or the like of a restriction target device to devices connected to the networks in the vehicle 2 to prevent a vehicle ECU information packet 800 transmitted from that device from being received by the other devices. Another approach is that the communication controller 130 transmits an error packet to the networks in the vehicle 2 immediately after a vehicle ECU information packet 800 is transmitted from a restriction target device to prevent the vehicle ECU information packet 800 transmitted from that device from being received by other devices. A various other approaches may be used to set a restriction target on a network basis or a device basis.

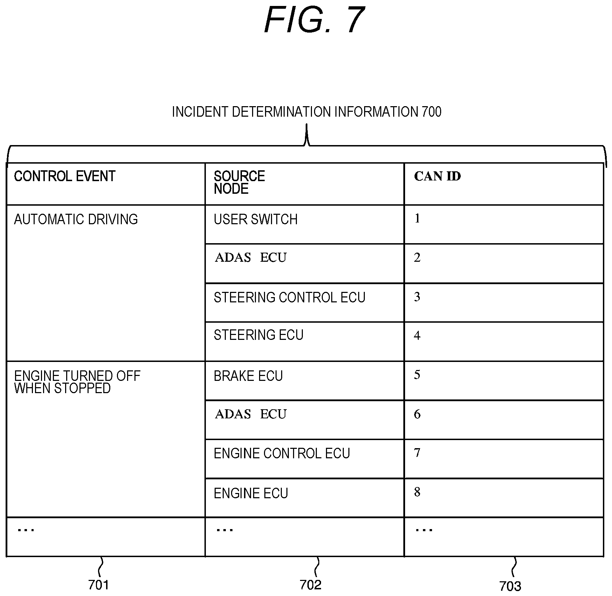

FIG. 7 is an explanatory table illustrating an exemplary configuration of incident determination information 700. The incident determination information 700 includes information of a control event 701, a source node 702, and a CAN ID 703.

The control event 701 is information indicating the control state of the vehicle 2. The control state of the vehicle 2 is determined depending on a driving mode and provided service set by a passenger in the vehicle 2. The control event 701 stores information indicating the control state of the vehicle 2 for each combination of a driving mode and provided service that can be set in the vehicle 2.

The source node 702 is information indicating a pattern of communication performed among devices in networks depending on the control state of the vehicle 2. The source node 702 stores, as information indicating a communication pattern for each control event 701, information indicating nodes (devices) in networks that sequentially transmit a vehicle ECU information packet 800. For example when a passenger operates the user switch 117 to start automatic driving of the vehicle 2, first, a vehicle ECU information packet 800 indicating an operation signal is transmitted by the user switch 117. Then, a vehicle ECU information packet 800 instructing each device to start automatic driving control is transmitted from the ADAS ECU 110. Next, a vehicle ECU information packet 800 indicating a steering control instruction is transmitted from the steering control ECU 113 to the steering ECU 107. Then a vehicle ECU information packet 800 for controlling the steering mechanism of the vehicle 2 is transmitted from the steering ECU 107. The source node 702 stores information indicating a series of communication flows among these devices in association with information indicating the automatic driving as the control event 701.

The CAN ID 703 is information indicating a CAN ID to be assigned when each device indicated by a source node 702 transmits a vehicle ECU information packet 800. As the CAN ID, a unique number is preset with for each device. Each device in the networks transmits a vehicle ECU information packet 800 after including the CAN ID set for the device. Thus, the communication controller 130 can identify which device is the source by checking a vehicle ECU information packet 800 transmitted and received among devices.

The incident detection processor 120 reads out the vehicle ECU information from the vehicle ECU information DB 173, and thereby acquires vehicle ECU information packets 800 transmitted and received among devices of the vehicle 2 connected to the networks in chronological order. Furthermore, as the current control state of the vehicle 2, a driving mode and provided service currently set in the vehicle 2 are specified. Then, the incident determination information 700 is read out from the incident determination information DB 172, and an area corresponding to the control state of the vehicle 2 is specified in the incident determination information 700 on the basis of the information of the control event 701. After one area in the incident determination information 700 is thus specified, the incident detection processor 120 compares the information of the CAN ID 703 in the area with a CAN ID included in the acquired vehicle ECU information packet 800 and determines whether they match. If the two do not match, it is determined that an incident has occurred.

Note that the incident determination information 700 may not indicate a normal communication pattern as described above but may be a blacklist indicating abnormal communication patterns. In this case, the incident detection processor 120 compares the incident determination information 700 with a CAN ID included in the vehicle ECU information packet 800 acquired from the vehicle ECU information DB 173, and determines that an incident has occurred if the two match.

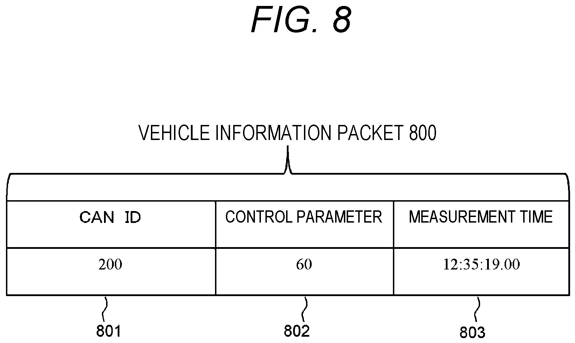

FIG. 8 is an explanatory table illustrating an exemplary configuration of a vehicle ECU information packet 800. The vehicle ECU information packet 800 includes information of a CAN ID 801, a control parameter 802, and measurement time 803.

The CAN ID 801 is information indicating a CAN ID set to a source of the vehicle ECU information packet 800. As described above, a unique number is preset as a CAN ID for each of the devices in the networks. Each of the devices sets information indicating the CAN ID set to the device as the CAN ID 801 when transmitting a vehicle ECU information packet 800.

The control parameter 802 is information representing a control value used in control performed by a device that has received the vehicle ECU information packet 800. Various values are set as the control parameter 802 depending on the contents of control performed by each of the devices. For example, information such as an accelerator position angle, a brake pressure, a steering angle, and the engine speed can be represented by the control parameter 802.

The measurement time 803 is information representing the transmission time of the vehicle ECU information packet 800. Each of the devices sets, as the measurement time 803, information indicating the time when transmitting the vehicle ECU information packet 800.

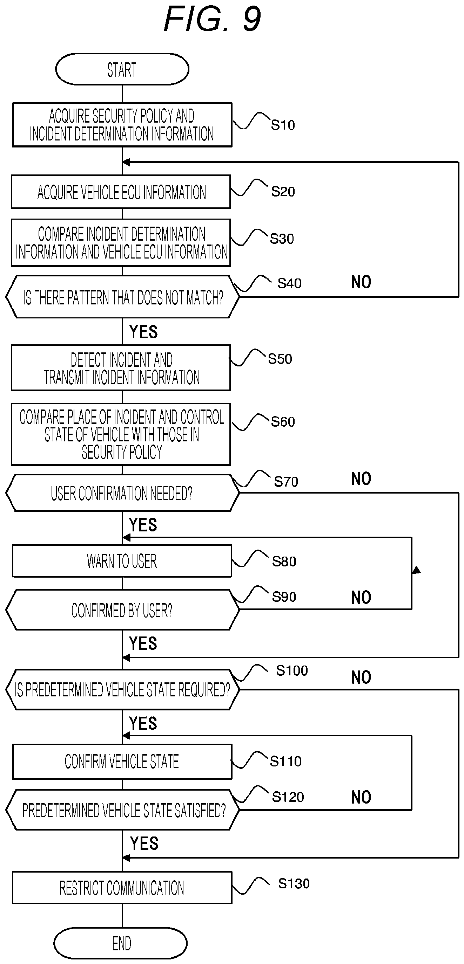

FIG. 9 is a flowchart of communication control processing executed by the CPU 102 in the in-vehicle gateway device 20. The processing illustrated in the flowchart is executed at predetermined time intervals by the CPU 102 of the in-vehicle gateway device 20 mounted on the vehicle 2.

In step S10, the CPU 102 receives, by the security policy processor 150, the security policy 600 transmitted from the center server 5 via the roadside device 3 and to store the security policy 600 in the security policy DB 171. In addition, the incident determination information processor 140 is caused to receive the incident determination information 700 transmitted from the center server 5 via the roadside device 3 and to store the incident determination information 700 in the incident determination information DB 172. As a result, the in-vehicle gateway device 20 acquires the security policy 600 and the incident determination information 700 provided by the center server 5.

In step S20, the CPU 102 acquires, by the communication controller 130, vehicle ECU information transmitted from each of the devices of the networks connected to the in-vehicle gateway device 20 and to store the acquired vehicle ECU information in the vehicle ECU information DB 173. That is, the in-vehicle gateway device 20 causes the communication controller 130 to receive vehicle ECU information packets 800 transmitted by the steering ECU 107, the brake ECU 108, and the engine ECU 109 in the control system network domain, the ADAS ECU 110 and the MPU ECU 111, the brake control ECU 112, the steering control ECU 113, the engine control ECU 114, the camera 115, and the GPS sensor 116 in the driving assist system network domain, and the user switch 117 and the display 118 in the information system network domain and to store the vehicle ECU information packets 800 in the vehicle ECU information DB 173 in chronological order as the vehicle ECU information.

In step S30, the CPU 102 reads out, by the incident detection processor 120, the incident determination information 700 and the vehicle ECU information acquired in steps S10 and S20 from the incident determination information DB 172 and the vehicle ECU information DB 173, respectively. Then, these pieces of information are compared.

In step S40, the CPU 102 determines, by the incident detection processor 120, whether the vehicle ECU information includes a communication pattern that does not match the incident determination information 700 from the comparison result in step S30. If there is an abnormal communication pattern that does not match, the flow proceeds to step S50. If there is no abnormal communication pattern, the flow returns to step S20, and acquisition of vehicle ECU information is continued.

In step S50, the CPU 102 determines, by the incident detection processor 120, that an incident has occurred in one of the networks connected to the in-vehicle gateway device 20 and detects the incident. Then a notification of incident occurrence is output to the communication controller 130, and incident information 1000 of the detected incident is output to the wireless communication device 106 and transmitted to the center server 5 via the roadside device 3.

In step S60, the CPU 102 reads out, by the communication controller 130, the security policy 600 acquired in step S10 from the security policy DB 171. Then, the read-out security policy 600 is compared with the place of incident detected in step S50 and the current control state of the vehicle 2. At this time, the place of incident is determined on the basis of the notification of incident occurrence output from the incident detection processor 120. As for the control state of the vehicle 2, the latest vehicle ECU information is read out from the vehicle ECU information DB 173, and the control state is determined on the basis of the vehicle ECU information. Alternatively, an inquiry about the control state of the vehicle 2 may be output to the ADAS ECU 110 or other components, and from a response to the inquiry, the control state of the vehicle 2 may be determined. From this comparison, the communication controller 130 can specify the control state of the vehicle 2 and the area corresponding to the place of incident in the security policy 600.

In step S70, the CPU 102 reads out, by the communication controller 130, whether a confirmation notification for the user being a passenger of the vehicle 2 is necessary before the communication in the restriction target network is restricted. This determination is performed on the basis of information of the user confirmation 606 in the area in the security policy 600 specified in step S60. If the confirmation notification is necessary, the flow proceeds to step S80, and if it is not necessary, the flow proceeds to step S100. Note that the detection of the incident may be notified to the user by outputting an instruction to display a predetermined notification screen to the display 118 from the communication controller 130 before proceeding to step S80 or S100.

For example, let us assume that an incident is detected when driving assist or automatic driving is performed in the vehicle 2 and that the place of the incident is in the driving assist system network domain. In this case, it is determined that user confirmation is necessary by proposing transition to the normal driving without performing the driving assist or the automatic driving from information described in a corresponding column of the user confirmation 606 in the security policy 600 illustrated in FIG. 6.

In step S80, the CPU 102 warns the user by the communication controller 130. Here, the communication controller 130 warns the user by outputting an instruction to display a predetermined confirmation screen, for example, on the display 118 on the basis of the information of the status confirmation 604 and the user confirmation 606 in the area of the security policy 600 specified in step S60.

In step S90, the CPU 102 determines, by the communication controller 130, whether the user has confirmed the warning performed in step S80. The communication controller 130 determines whether confirmation by the user has been obtained by, for example, determining whether a predetermined operation signal has been output from the user switch 117. If it is determined that the user has confirmed, the flow proceeds to step S100. If it is determined that the user has not confirmed, the flow returns to step S80, and warning to the user is continued. Note that a function may be added which measures the number of times or the time of the determination in step S90 having performed, and determines a time-out when a predetermined number of times or the time is exceeded to forcibly stop the vehicle 2.

In step S100, the CPU 102 determines, by the communication controller 130, whether the vehicle 2 needs to be in a predetermined vehicle state before the communication in the restriction target network is restricted. This determination is performed on the basis of the information of the vehicle state 607 in the area in the security policy 600 specified in step S60. If it is necessary for the vehicle 2 to be in a predetermined vehicle state, for example in the stop state, the flow proceeds to step S110. If not, the flow proceeds to step S130.

For example, let us assume that an incident is detected when driving assist is performed in the vehicle 2 and that the place of the incident is in the driving assist system network domain. In this case, it is determined from the information described in the corresponding column of the vehicle state 607 in the security policy 600 illustrated in FIG. 6 that the vehicle 2 needs to be in the stop state.

In step S110, the CPU 102 confirms the state of the vehicle 2 by the communication controller 130. Here, the communication controller 130 reads out, for example, the latest vehicle ECU information from the vehicle ECU information DB 173 and determines the state of the vehicle 2 on the basis of the vehicle ECU information. Alternatively, an inquiry about the state of the vehicle 2 may be output to the engine ECU 109 or other components, and the state of the vehicle 2 may be determined from a response to the inquiry.

In step S120, the CPU 102 determines, by the communication controller 130, whether the vehicle 2 is in a predetermined vehicle state designated by the security policy 600 on the basis of the state of the vehicle 2 confirmed in step S110. If it is determined that the vehicle 2 is in the predetermined vehicle state, the flow proceeds to step S130. If it is determined as not being in the predetermined vehicle state, the flow returns to step S110, and confirmation of the vehicle state is continued. Note that, like in step S90, a function may be added which measures the number of times or the time of the determination in step S120 having performed and determines a time-out when a predetermined number of times or the time is exceeded to forcibly stop the vehicle 2.

In step S130, the CPU 102 performs communication restriction on the restriction target network by the communication controller 130. Here the communication controller 130 determines which is the restriction target network out of the control system network domain, the driving assist system network domain, and the information system network domain connected to the in-vehicle gateway device 20 on the basis of the information of the restriction target NW 605 in the area of the security policy 600 specified in step S60. Then, by preventing vehicle ECU information packets 800 transmitted from devices within the restriction target network from being received by devices in the same network and other networks, the communication in the restriction target network is restricted.

For example, let us assume that an incident is detected during the normal driving when neither driving assist nor automatic driving is performed in the vehicle 2 and that the place of the incident is in the control system network domain. In this case, the driving assist system network domain and the information system network domain are determined to be the restriction target networks from the information described in the corresponding column of the restriction target NW 605 in the security policy 600 illustrated in FIG. 6. Alternatively, let us assume that an incident is detected when driving assist or automatic driving is performed in the vehicle 2 and that the place of the incident is in the driving assist system network domain. In this case, the driving assist system network domain and the information system network domain are determined to be the restriction target networks from the information described in the corresponding column of the restriction target NW 605 in the security policy 600 illustrated in FIG. 6.

After step S130 is executed, the CPU 102 completes the processing illustrated in the flowchart of FIG. 9.

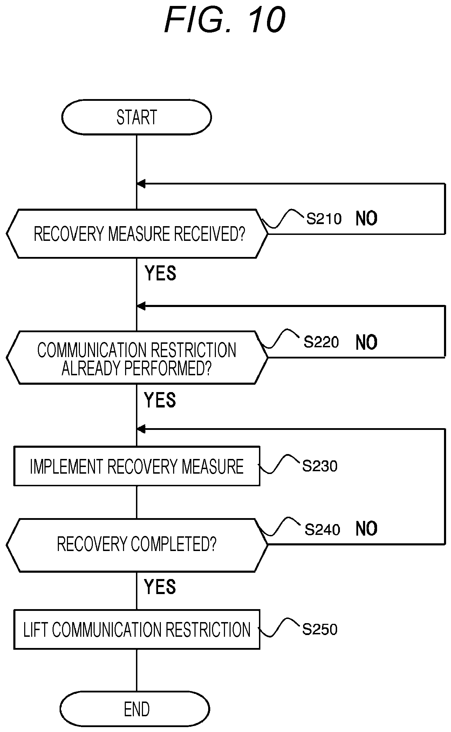

FIG. 10 is a flowchart of recovery processing executed by the CPU 102 of the in-vehicle gateway device 20. The processing illustrated in this flowchart is executed after the communication restriction on the restriction target network has been performed by the communication control processing described in FIG. 9 by the CPU 102 of the in-vehicle gateway device 20 mounted on the vehicle 2.

In step S210, the CPU 102 determines, by the recovery measure processor 160, whether a recovery measure 900 transmitted from the center server 5 via the roadside device 3 has been received. If the recovery measure 900 has not been received, the flow remains at step S210, and if the recovery measure 900 has been received, the flow proceeds to step S220.

In step S220, the CPU 102 determines, by the communication controller 130, whether communication restriction on a restriction target network has been performed. If communication restriction has been performed in step S130 of FIG. 9, the flow proceeds to step S230, and if not, the flow remains at step S220.

In step S230, the CPU 102 transmits, by the communication controller 130, the received recovery measure 900 to a designated destination device and causes the device to implement the recovery measure 900. The device having received the recovery measure 900 from the communication controller 130 removes the cause of the incident by, for example, initializing software using the recovery measure 900.

In step S240, the CPU 102 determines, by the communication controller 130, whether recovery of the device has been completed by the recovery measure implemented in step S230. If recovery of the device has been completed and the cause of the incident has been successfully removed, the flow proceeds to step S250. If the recovery is not completed, the flow returns to step S230, and implementation of the recovery measure is continued.

In step S250, the CPU 102 lifts, by the communication controller 130, the communication restriction of the restriction target network performed in step S130 of FIG. 9 and brings the control state of the vehicle 2 back to the state before the communication restriction. Note that the communication restriction has been lifted may be notified to the user by outputting an instruction to display a predetermined notification screen to the display 118 from the communication controller 130.

After execution of step S250, the CPU 102 completes the processing illustrated in the flowchart of FIG. 10.

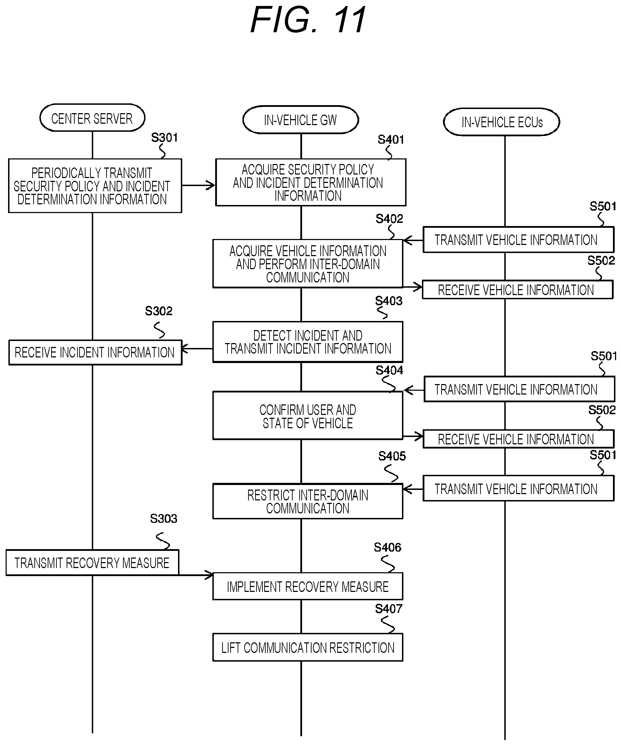

Next, the operation of the entire vehicle information network system 1 will be described. FIG. 11 is a sequence diagram illustrating the operation of the entire vehicle information network system 1. In the vehicle information network system 1, the center server 5, the in-vehicle gateway device 20, and devices in the network each execute the processing illustrated in FIG. 11.

In step S301, the center server 5 periodically transmits security policy 600 retrieved from the security policy DB 552 and incident determination information 700 retrieved from the incident information DB 551 to the in-vehicle gateway device 20 via the roadside device 3.

In step S302, the center server 5 receives the incident information 1000 transmitted from the in-vehicle gateway device 20 via the roadside device 3 and stores the incident information 1000 in the incident information DB 551.

In step S303, the center server 5 transmits a recovery measure 900 generated by the recovery measure generator 540 to the in-vehicle gateway device 20 via the roadside device 3.

In step S401, the in-vehicle gateway device 20 receives the security policy 600 and the incident determination information 700 transmitted from the center server 5, and stores the security policy 600 and the incident determination information 700 in the security policy DB 171 and the incident determination information DB 172, respectively.

In step S402, the in-vehicle gateway device 20 receives vehicle ECU information packets 800 transmitted from each device of the networks. Then, the received vehicle ECU information packets 800 are stored in the vehicle ECU information DB 173, and inter-domain communication for transfer to another network is performed as required depending on a designated destination.

When an incident occurs, the in-vehicle gateway device 20 detects the incident that has occurred using the incident determination information 700 in step S403 and transmits the incident information 1000 to the center server 5.

In step S404, the in-vehicle gateway device 20 refers to the vehicle ECU information accumulated in the vehicle ECU information DB 173 and confirms, as required, that user confirmation and confirmation of the vehicle state indicated in the security policy 600 have been performed.

In step S405, the in-vehicle gateway device 20 cancels transfer of a vehicle ECU information packet 800 from the restriction target network indicated by the security policy 600 to another network, and thereby restricts inter-domain communication.

In step S406, the in-vehicle gateway device 20 receives the recovery measure 900 transmitted from the center server 5, and implements the recovery measure 900 on the device as the place of the incident.

When implementation of the recovery measure 900 is completed, the in-vehicle gateway device 20 lifts the communication restriction on the restriction target network in step S407.

In step S501, the steering ECU 107, the brake ECU 108, and the engine ECU 109 in the control system network domain, the ADAS ECU 110, the MPU ECU 111, the brake control ECU 112, the steering control ECU 113, the engine control ECU 114, the camera 115, and the GPS sensor 116 in the driving assist system network domain, and the user switch 117 and the display 118 in the information system network domain each transmit a vehicle ECU information packet 800 to other devices.

In step S502, devices designated as a destination of a vehicle ECU information packet 800 transmitted in step S501 receive the vehicle ECU information packet 800. Each of the devices of the networks repeats the processing of steps S501 and S502.

According to the embodiment of the present invention described above, the following effects are obtained.
(1) The in-vehicle gateway device 20 is connected to the control system network domain, the driving assist system network domain, and the information system network domain, which are a plurality of networks each connected with the plurality devices mounted on the vehicle 2. An in-vehicle gateway device 20 includes: the incident detection processor 120 which detects an incident occurring in any one of the plurality of networks; and the communication controller 130 which determines, in a case where the incident is detected, a restriction target network from among the plurality of networks on the basis of a place where the incident has occurred and the control state of the vehicle 2, and restricts communication in the restriction target network. With this arrangement, it is possible to restrict unauthorized communication without adversely affecting the vehicle control.
(2) In the case where an incident is detected, the communication controller 130 determines whether a confirmation notification to the user of the vehicle 2 is necessary on the basis of the place where the incident has occurred and the control state of the vehicle 2 (step S70). In a case where it is determined as a result that the confirmation notification is necessary, the communication controller 130 warns the user in the form of a confirmation notification (step S80), and after a predetermined confirmation operation is performed by the user for the confirmation notification (step S90), restricts communication in the restriction target network (step S130). With this arrangement, in a case where the control state of the vehicle 2 changes when communication is restricted, the user as a passenger of the vehicle 2 can be ensured to recognize this fact, which allows a countermeasure against an incident to be performed safely.
(3) In the case where an incident is detected, the communication controller 130 determines whether it is necessary for the vehicle 2 to be in a predetermined vehicle state on the basis of the place where the incident has occurred and the control state of the vehicle 2 (step S100). In a case where it is determined as a result that it is necessary for the vehicle 2 to be in a predetermined vehicle state, the communication controller 130 restricts communication in the restriction target network (step S130) after the vehicle 2 enters the predetermined vehicle state (step S120). With this arrangement, in a case where the control state of the vehicle 2 changes when communication is restricted, communication is restricted after it is confirmed that the vehicle 2 is in a safe state, which allows a countermeasure against an incident to be performed safely.
(4) The in-vehicle gateway device 20 further includes the storage 101 which stores the security policy 600 representing the relationship among the place where the incident has occurred, the control state of the vehicle 2, and the restriction target network. The communication controller 130 determines a restriction target network on the basis of the security policy 600. With this arrangement, it can be determined appropriately which network is to be regarded as a restriction target network depending on the place of incident and the control state of vehicle 2.
(5) The in-vehicle gateway device 20 is connected to the center server 5 installed outside the vehicle 2. The incident detection processor 120 transmits incident information 1000 related to a detected incident to the center server 5. The security policy 600 is provided from the center server 5 on the basis of the incident information 1000 transmitted to the center server 5. With this arrangement, the security policy 600 having appropriate contents can be provided depending on a state of an incident occurring in each vehicle.
(6) The plurality of networks connected to the in-vehicle gateway device 20 includes: the control system network in which communication for drives control of the vehicle 2 is performed; the driving assist system network in which communication for driving assist or automatic driving of the vehicle 2 is performed; and an information system network in which communication for a user interface for a passenger of the vehicle 2 is performed. In a case where an incident is detected in the control system network while neither the driving assist nor the automatic driving is performed in the vehicle 2, the communication controller 130 determines the driving assist system network and the information system network as restriction target networks from the security policy 600 illustrated in FIG. 6. Alternatively, in a case where an incident is detected in the driving assist system network while the driving assist or the automatic driving is performed in the vehicle 2, the communication controller 130 determines the driving assist system network and the information system network as restriction target networks from the security policy 600 illustrated in FIG. 6. With this arrangement, it is possible to reliably determine a restriction target network depending on the place of incident and the control state of the vehicle 2.

Note that the above-described embodiments and various variations are merely examples. The present invention is not limited to the above embodiments as long as the features of the present invention are not impaired, and other embodiments conceivable within the scope of the technical idea of the present invention are also included in the scope of the present invention.

The contents disclosed in the following application as the basis of the priority are incorporated herein by reference.

Japanese Patent Application No. 2017-026734 (filed on February 16, 2017)

### Reference Signs List

- 1: vehicle information network system
- 2: vehicle
- 3: roadside device
- 4: network
- 5: center server
- 20: in-vehicle gateway device
- 101: storage
- 102: CPU
- 103: memory unit
- 106: wireless communication device
- 107: steering ECU
- 108: brake ECU
- 109: engine ECU
- 110: ADAS ECU
- 111: MPU ECU
- 112: brake control ECU
- 113: steering control ECU
- 114: engine control ECU
- 115: camera
- 116: GPS sensor
- 117: user switch
- 118: display

## Claims

1. An in-vehicle gateway device connected to a plurality of networks, each connected with a plurality devices mounted on a vehicle, the in-vehicle gateway device comprising:
an incident detection processor which detects an incident occurring in any one of the plurality of networks; and
a communication controller which determines, in a case where the incident is detected, a restriction target network from among the plurality of networks on the basis of a place where the incident has occurred and a control state of the vehicle and restricts communication in the restriction target network.

2. The in-vehicle gateway device according to claim 1,
wherein, in the case where the incident is detected, the communication controller determines whether a confirmation notification is necessary on the basis of the place where the incident has occurred and the control state of the vehicle, and
in a case where it is determined that the confirmation notification is necessary, the communication controller performs the confirmation notification, and after predetermined confirmation operation is performed for the confirmation notification, restricts communication in the restriction target network.

3. The in-vehicle gateway device according to claim 1,
wherein, in the case where the incident is detected, the communication controller determines whether it is necessary for the vehicle to be in a predetermined vehicle state on the basis of the place where the incident has occurred and the control state of the vehicle, and
in a case where it is determined that it is necessary for the vehicle to be in the predetermined vehicle state, the communication controller restricts communication in the restriction target network after the vehicle enters the predetermined vehicle state.

4. The in-vehicle gateway device according to claim 1, further comprising:
a storage unit which stores a security policy representing a relationship among the place where the incident has occurred, the control state of the vehicle, and the restriction target network,
wherein the communication controller determines the restriction target network on the basis of the security policy.

5. The in-vehicle gateway device according to claim 4,
wherein the in-vehicle gateway device is connected to a center server installed outside the vehicle,
the incident detection processor transmits incident information related to the detected incident to the center server, and
the security policy is provided from the center server on the basis of the incident information transmitted to the center server.

6. The in-vehicle gateway device according to claim 1,
wherein the plurality of networks comprises a control system network in which communication for driving control of the vehicle is performed, a driving assist system network in which communication for driving assist or automatic driving of the vehicle is performed, and an information system network in which communication for a user interface for a passenger of the vehicle is performed,
in a case where the incident is detected in the control system network while neither driving assist nor automatic driving is performed in the vehicle, the communication controller determines the driving assist system network and the information system network as the restriction target networks, and
in a case where the incident is detected in the driving assist system network while the driving assist or the automatic driving is performed in the vehicle, the communication controller determines the driving assist system network and the information system network as the restriction target networks.

7. A communication restriction method in a plurality of networks, each connected with a plurality devices mounted on a vehicle,
the plurality of networks each connected to an in-vehicle gateway device, the communication restriction method comprising:
detecting, by the in-vehicle gateway device, an incident occurring in any one of the plurality of networks; and
determining, by the in-vehicle gateway device, a restriction target network from among the plurality of networks on the basis of a place where the incident has occurred and a control state of the vehicle and restricting communication in the restriction target network in a case where the incident is detected.
